# EUROPÄISCHE PATENTANMELDUNG

(11) **EP 1 452 261 A1**
(43) Veröffentlichungstag der Anmeldung: **01.09.2004**
(21) Anmeldenummer: 03028910.2
(22) Anmeldetag: 17.12.2003
(51) Int. Cl.: B23K 3/02, B23K 3/047, B23K 3/03, B23K 35/02

(54) **Werkzeug aus einer Keramik in Form eines heizbaren Stiftes**

(30) Priorität: 25.02.2003 DE 10307832
(71) Anmelder: Forschungszentrum Karlsruhe GmbH, 76133 Karlsruhe (DE)
(72) Erfinder: Ritzhaupt-Kleissl, Hans-Joachim, Dr., 69190 Walldorf (DE); Kaufmann, Ulrike, Dr., 76133 Karlsruhe (DE)

(57) **Zusammenfassung**

Aufgabe der Erfindung ist, ein Werkzeug in Form eines heizbaren Stiftes zum Verbinden von zwei Gegenständen vorzuschlagen, das dafür besser geeignet ist als die bisher eingesetzten Werkzeuge. Vorgeschlagen wird ein Werkzeug, das aus einer Keramik besteht und eine geglättete Fläche aufweist, die in der Weise auf dem Werkzeug angeordnet ist, dass sie mit mindestens einem der Gegenstände in Kontakt gebracht werden und dabei Wärme auf den mindestens einen der Gegenstände übertragen kann.

## Beschreibung

Die Erfindung betrifft ein Werkzeug gemäß dem ersten Patentanspruch.

Müssen flächige Gegenstände wie z. B. Bänder, Platten oder Folien miteinander verbunden werden, wird die Verbindung häufig durch ein Verfahren bewirkt, bei dem Wärme auf mindestens einen der Gegenstände übertragen wird. Die am häufigsten genutzten Verbindungsverfahren dieser Art sind das Schweißen und das Löten.

Üblicherweise werden zum Schweißen und Löten Stifte aus einem Metall eingesetzt, obwohl Metall an sich für die auftretenden, zum Teil sehr hohen Temperaturen nicht besonders gut geeignet ist. Die üblicherweise eingesetzten Metalle oxidieren oder verzundern leicht und verunreinigen dadurch die zu verbindenden Gegenstände. Beim Löten mit Metallstiften kommt es zu Verklebungen mit den zu verarbeitenden Materialien, denn die gute Benetzbarkeit des Metallstifts mit dem Lot führt dazu, dass das Lot am Metallstift kleben bleibt und deshalb eine unvollständige oder unsaubere Lötung bewirkt.

Glühstifte aus einer Keramik, auch aus elektrisch leitfähigen Keramiken, sind für viele andere Zwecke im Einsatz. Die Verwendung solcher Glühstifte zum Verbinden von zwei Gegenständen ist ohne eine besondere Anpassung dagegen nicht möglich.

Der Erfindung liegt daher die Aufgabe zugrunde, ein Material und eine Gestaltung für Werkzeuge in Form eines heizbaren Stiftes zu finden, so dass das Werkzeug zum Verbinden von zwei Gegenständen besser geeignet ist als die bisher dafür eingesetzten Metallstifte.

Die Aufgabe wird durch das im ersten Patentanspruch beschriebene Werkzeug gelöst. Besonders geeignete Ausführungsformen sind Gegenstand der abhängigen Ansprüche.

Wesentliche Merkmale des vorgeschlagenen Werkzeugs sind, dass es aus einer Keramik besteht und auf der Keramik-Oberfläche eine geglättete Fläche vorhanden ist. Mit dieser geglätteten Fläche wird Wärme vom Werkzeug auf einen oder mehrere der zu verbindenden Gegenstände übertragen.

Die Heizung des Stiftes erfolgt vorzugsweise als Widerstandsheizung. Eine Widerstandsheizung unmittelbar im Stift lässt sich bei Verwendung elektrisch leitfähiger Keramiken realisieren. Die elektrischen Zuleitungen können in eine Halterung für den Stift integriert werden. Die Halterung umschließt vorzugsweise ein Ende des Stiftes. Elektrisch leitfähige Keramiken sind die Carbide, Nitride und Boride der IV., V. und VI. Nebengruppenmetalle des Periodischen Systems. Leitfähig ist außerdem Molybdänsilicid (MoSi₂).

Vorzugsweise besteht die Keramik, aus dem das Werkzeug gefertigt ist, aus einer Mischkeramik, die isolierende und elektrisch leitfähige Keramiken enthält. Isolierende Keramiken sind insbesondere Si₃N₄ und Al₂O₃, denen ggf. anorganische, nichtmetallische Komponenten beispielsweise als Sinterhilfe zugesetzt werden. In der Mischkeramik sollen die leitfähigen Keramiken in einem Anteil von 15 bis 75 Vol.-% vorhanden sein. Die gewünschten Werte für den elektrischen Widerstand lassen sich durch die Vorgabe bestimmter Werte für die Querschnittsfläche oder durch die Kombination verschiedener Materialien mit unterschiedlicher elektrischer Leitfähigkeit einstellen. Die elektrischen Kontakte mit einer Spannungsquelle können beispielsweise durch Hartlöten oder Klemmen angebracht werden.

Voraussetzung für die Eignung des Werkzeuges zum Verbinden von Gegenständen ist, dass eine geglättete Fläche vorhanden ist, über die der Kontakt zwischen dem Werkzeug und einem oder - beim Verbinden aneinander anstoßenden Gegenständen - mehreren Gegenständen hergestellt wird. Das Glätten kann durch Schleifen und/oder Polieren erfolgen. Die Anordnung der geglätteten Fläche erfolgt vorzugsweise an dem freien, der Halterung des Werkzeugs gegenüberliegenden Ende. Die geglättete Fläche kann senkrecht zur Längsachse des Werkzeugs angeordnet sein, so dass sich eine Säulenform mit runder oder mehreckiger Grundfläche ergibt. Ebenso gut kann aber die geglättete Fläche einen anderen Winkel zur Längsachse des Werkzeugs bilden. Diese Ausführungsform ist besonders dann von Interesse, wenn die geglättete Fläche größer sein soll als der Querschnitt des Werkzeugs senkrecht zur Längsachse.

In einer weiteren Ausführungsform ist die geglättete Fläche parallel zur Längsachse des stiftförmigen Werkzeuges angeordnet, so dass es mit einer seiner Seitenflächen auf mindestens einem der zu verbindenden Gegenstände aufliegt. Bei dieser Ausführungsform nimmt die Kontaktfläche zwischen dem Werkzeug und dem Gegenstand die größtmögliche Fläche an. Diese Ausführungsform eignet sich insbesondere zum Verbinden von flächigen Teilen, etwa Folien, Platten etc., miteinander. Für diesen Einsatzzweck können auch zwei identische Werkzeuge verwendet werden, wobei beispielsweise zwei Folien zwischen den beiden geglätteten Flächen zweier Werkzeuge eingespannt und beide Werkzeuge erhitzt werden.

Einsatzgebiete des Werkzeugs sind insbesondere Schweiß- und Lötverfahren. Beim Schweißen steht die Schweißung von Metallen, beispielsweise auch durch Punktschweißen, im Vordergrund. Mit dem beschriebenen Werkzeug sind jedoch auch schon Folien aus Kunststoff, insbesondere aus Teflon, miteinander ver schweißt worden. Zum Löten können in bekannter Weise Metallteile mit einem Lot verbunden werden.

Ein wesentlicher Vorteil des vorgeschlagenen Werkzeugs gegenüber entsprechenden Werkzeugen aus Metall ist, dass die Temperatur über weite Grenzen an die jeweiligen Erfordernisse angepasst werden kann. Zum Verbinden von Teflon-Teilen kann die Temperatur des Werkzeugs auf 200°C bis 250°C eingestellt werden. Andererseits können ohne weiteres Temperaturen bis zu 1400°C angewandt werden. Die bevorzugte Einsatztemperatur des Werkzeugs liegt zwischen 50°C und 1200°C. Ein weiterer Vorteil ist, dass Anbackungen aus dem Material der zu verbindenden Gegenstände und/oder aus dem Lot weitgehend ausbleiben.

Die Erfindung wird im folgenden anhand einiger Ausführungsbeispiele näher erläutert.

### Beispiel 1

### Löten von verzinnten Blechen

Zum Löten von verzinnten Blechen in einem Reinraum wurde jeweils ein Lötstift aus Keramik hergestellt. Die Lötstifte hatten die Zusammensetzung

| | | |
|---|---|---|
| Al₂O₃ | bzw. | Si₃N₄ |
| Al₂O₃/TiN 40 | | Si₃N₄/TiN 40 |
| Al₂O₃/TiN 23 ... 25 | | Si₃N₄/TiN 25 |

Sie waren quaderförmig mit einer Länge von 4 cm und einem Querschnitt von 4 x 4 mm². Die geglättete Fläche war poliert, senkrecht zur Längsachse angeordnet und hatte eine Größe von 4 x 4 mm. Die elektrischen Anschlüsse befanden sich an dem der geglätteten Fläche gegenüber liegenden Seite. Die Lötstifte wurden durch Widerstandsheizung auf eine Betriebstemperatur von 750°C bis 900°C gebracht. Bei dieser Temperatur wurden in dem Reinraum jeweils zwei streifenförmige Bleche, die an ihren Enden überlappend im Winkel von 90° aufeinander gelegt wurden, miteinander verlötet, in dem die Lötstifte jeweils ca. 3 Sekunden mit der polierten Fläche auf das obere der beiden Bleche aufgesetzt wurden. Als Lot diente in diesem Fall das Zinn auf den Blechen. Es ergab sich in allen Fällen eine feste Verbindung zwischen den Blechen.

### Beispiel 2

### Verschweißen von Teflon-Folien

Zum Verschweißen von Teflon-Folien wurden zwei gleichartig gestaltete Werkzeuge eingesetzt. Beide Werkzeuge stellten Quader mit Abmessungen von 5 x 25 x 2 cm³ dar. Die beiden äußeren Bereiche der Quader bestanden aus Si₃N₄/TiN 40, der mittlere Bereich aus Si₃N₄ 25. Die beiden äußeren Bereiche wurden in der Weise mit elektrischen Leitungen verbunden, dass der Strom den mittleren Bereich aufheizte. An die elektrischen Leitungen wurde eine Spannung von 2 V angelegt, wobei sich eine Stromstärke von 25 A einstellte. Bei beiden Werkzeugen befand sich die polierte Fläche auf einer der langen Seiten des Quaders. Zwei Teflonfolien wurden übereinander gelegt und von beiden freien Seiten durch die polierten Flächen der beiden Werkzeuge zusammengedrückt, wobei die Spannung für ca. 15 Sekunden angelegt wurde. Auch hier ergab sich eine feste Verbindung der Teflon-Folien an der zwischen den Werkzeugen liegenden Stelle.

## Patentansprüche

1. Werkzeug in Form eines heizbaren Stiftes zum Verbinden von zwei Gegenständen, das
- aus einer Keramik besteht und
- eine geglättete Fläche aufweist, die in der Weise auf dem Werkzeug angeordnet ist,
dass sie mit mindestens einem der Gegenstände in Kontakt gebracht werden und
dabei Wärme auf den mindestens einen der Gegenstände übertragen kann.

2. Werkzeug nach Anspruch 1, bei dem die Keramik eine Mischkeramik bestehend aus einer isolierenden und einer elektrisch leitfähigen Keramik darstellt.

3. Werkzeug nach Anspruch 2, bei dem die isolierende Keramik Si₃N₄ oder Al₂O₃ darstellt.

4. Werkzeug nach Anspruch 3, bei dem die isolierende Keramik zusätzlich anorganische, nichtmetallische Bestandteile enthält.

5. Werkzeug nach Anspruch 2, bei dem die elektrisch leitfähige Keramik ein Carbid, Nitrid oder Borid der IV b bis VI b Nebengruppe des Periodischen Systems oder MoSi₂ darstellt oder enthält.

6. Werkzeug nach einem der Ansprüche 1 bis 5, bei dem die geglättete Fläche geschliffen und/oder poliert ist.
